# EUROPEAN PATENT SPECIFICATION

(11) **EP 3 705 462 B1**
(45) Date of publication and mention of the grant of the patent: **28.08.2024**
(21) Application number: 19161704.2
(22) Date of filing: 08.03.2019
(51) Int. Cl.: C04B 28/18

(54) **METHOD OF MAKING CALCIUM SILICATE BRICKS**
VERFAHREN ZUR HERSTELLUNG VON CALCIUMSILIKATZIEGELN
PROCÉDÉ DE FABRICATION DE BRIQUES DE SILICATE DE CALCIUM

(43) Date of publication of application: 09.09.2020
(73) Proprietor: Calduran Kalkzandsteen B.V., 3846 BH Harderwijk (NL); CRH Nederland B.V., 1083 HL Amsterdam (NL)
(72) Inventor: TEMMERMANS, Frans, 3846 BH Harderwijk (NL); TROMP, Olof, 3846 BH Harderwijk (NL); SANTAMARIA RAZO, Diego Adolfo, 1083 AH Amsterdam (NL)
(74) Representative: Slingsby Partners LLP

(56) References cited:
- RU-C1- 2 171 239
- ABD-EL-WAHED, MOHAMED G.; EL-DIAMONY, HAMDY; GALAL, ABD EL KADAR F.; SHATER, MAGDA A.: "Cement dust binder for autoclaved cellular concrete", CHEMICAL ABSTRACTS, no. 8, 26 August 1985 (1985-08-26), XP000188551, ISSN: 0009-2258

## Description

### Field of the invention

The invention relates to a method of making calcium silicate bricks, in particular use of cement kiln dust in a process for making calcium silicate bricks.

### Background

Processes for making calcium silicate bricks are known in the art. Typically, a combination of sand, quicklime and water as raw materials is mixed, hydrated, shaped and hardened in an autoclave at approximately 200°C to produce calcium silicate bricks. The process triggers a chemical reaction between the CaO and the surface of the sand grains. The resulting calciumhydrosilicate forms a strong bond between the grains.

On an industrial scale, this process is intensive on use of natural materials such as lime. Natural lime is a costly raw material and it would be beneficial both in terms of production costs and the environment to reduce the use of natural lime. US2012/255463 discloses the use of cement kiln dust and cement bypass dust in combination with other ingredients to make a hardened construction block. The raw materials include at least 70 wt% cement kiln dust.

SU1303589 discloses a process of making blocks.

KR101219616B discloses a process of making a concrete composition.

RU2171239C1 discloses a method for producing autoclaved calcium silicate bricks.

ABD-EL-WAHED, MOHAMED G.; EL-DIAMONY, HAMDY; GALAL, ABD EL KADAR F.; SHATER, MAGDA A.: "Cement dust binder for autoclaved cellular concrete", CHEMICAL ABSTRACTS, no. 8, 26 August 1985 (1985-08-26) discloses an autoclaved cellular concrete.

### Summary

Accordingly, the invention provides a method of making a calcium silicate brick, the method comprising: providing starting materials comprising sand, water and quicklime; mixing the starting materials to form a mixture; shaping the mixture to form a green body; hardening the green body to form a calcium silicate block; wherein the one or more sources of quicklime comprises cement kiln dust, characterised in that the amount of cement kiln dust is from 0.5 to 2.5 wt% of the total weight of starting materials.

The invention also provides starting materials for making a calcium silicate brick, the starting materials comprising sand, water, quicklime and cement kiln dust, wherein the amount of cement kiln dust is from 0.5 to 2.5 wt% of the total weight of starting materials.

The cement industry has a difficult task to deal with a waste product from the production of cement, known as bypass dust or kiln dust, referred to in this specification as 'cement kiln dust'. Cement kiln dust is a hazardous waste product from the cement manufacturing process and it is costly to dispose of cement kiln dust due to strict regulations on this hazardous material. Furthermore, the amount of cement kiln dust produced in the cement industry is expected to increase in the future, as the use of alternative fuels (such as end-of-life tyres) in cement kilns is also expected to increase. Alternative fuels are environmentally beneficial in terms of reducing the CO₂ footprint of a cement plant, but increase the amount of bypass dust generated in the process.

Cement kiln dust has previously had only very limited applicability in construction: it is of little value in cement and reinforced concrete because the chloride content of cement kiln dust has deleterious effects on the quality of cement and can corrode steel reinforcement.

With this invention, not only is the use of natural lime in calcium silicate brick production reduced compared to known processes, therefore reducing the economic and environmental cost of making calcium silicate bricks, but also an otherwise hazardous waste material - cement kiln dust - can be utilised in a safe manner on an industrial scale to produce useful new products.

The cement kiln dust may have a particle size of less than 90 µm. Reducing or eliminating the amount of particles above 90 µm may improve the uniformity of the finished calcium silicate bricks.

The starting materials may further comprise paper ash. This allows further reduction in use of natural lime.

The amount of sand may be from 85 to 95 wt% of the starting materials.

The amount of water may be from 2 to 8 wt% of the starting materials.

The amount of the one or more sources of quicklime may be from 1 to 10 wt% of the starting materials, preferably from 2 to 7 wt% of the starting materials, more preferably from 3 to 6 wt% of the starting materials.

The one or more sources of quicklime may comprise a mixture of natural lime and cement kiln dust. This may achieve a balance between reducing the use of natural material and achieving acceptable compressive strength and density of finished calcium silicate bricks, and acceptable green strength of the shaped mixture.

The one or more sources of quicklime may comprise a mixture of natural lime, cement kiln dust and paper ash. Using two alternative sources of quicklime than natural lime may further reduce the use of natural raw materials.

The cement kiln dust may make up from 5 to 60 wt% of the one or more sources of quicklime. This ratio may allow a balance between acceptable material properties (such as compressive strength and density of the finished calcium silicate bricks and green strength of the shaped mixture) and sufficient substitution of the raw material natural lime with cement kiln dust, which is a material that would otherwise need disposing of.

### Brief description of drawings

Figure 1 shows a graph of the measured particle size distribution of a sample of cement kiln dust.
Figure 2A shows compressive strength of finished calcium silicate bricks as a function of the % of the sources of quicklime that is cement kiln dust, when the total amount of sources of quicklime and the amount of sand and water is kept constant.
Figure 2B shows the green strength of pre-hardened, shaped mixture as a function of the % of the sources of quicklime that is cement kiln dust, when the total amount of sources of quicklime and the amount of sand and water is kept constant.
Figure 2C shows the density of finished calcium silicate bricks as a function of the % of the sources of quicklime that is cement kiln dust, when the total amount of sources of quicklime and the amount of sand and water is kept constant.

### Detailed description

The method of the invention utilises a standard process for making calcium silicate bricks with novel starting materials. A typical process for making calcium silicate bricks involves dosing of starting materials, mixing those starting materials, optionally subjecting the mixture to a hydration step during which quicklime is slaked, shaping the mixture to form a green body, and then finally hardening the green body in an autoclave.

Persons skilled in the art of making calcium silicate bricks will be aware of suitable time periods, temperatures and pressures for each step. As an example, the autoclave step may be conducted at approximately 200°C for approximately 5 to 13 hours, dependent on the size of the bricks to be hardened. The hydration step if used may be approximately 0.5 to 4 hours and the duration of the mixing step is typically on a scale of a few minutes.

The cement kiln dust used in the invention is a partial replacement for other sources of quicklime in the process for making calcium silicate bricks. In particular, the majority of quicklime is typically sourced from a quarry, and so the cement kiln dust can replace some of this natural material to reduce the energy usage and natural material usage of the process.

The cement kiln dust in the starting materials is preferably dried. This may make the processing easier.

Cement kiln dust can come from the ash of the cement kiln or filtered from the exhaust of a cement kiln (bypass dust). The exact chemical composition of cement kiln dust depends on the nature of the fuels used in the cement kiln, particularly as the use of alternative fuels such as end-of-life tyres becomes more common in the industry.

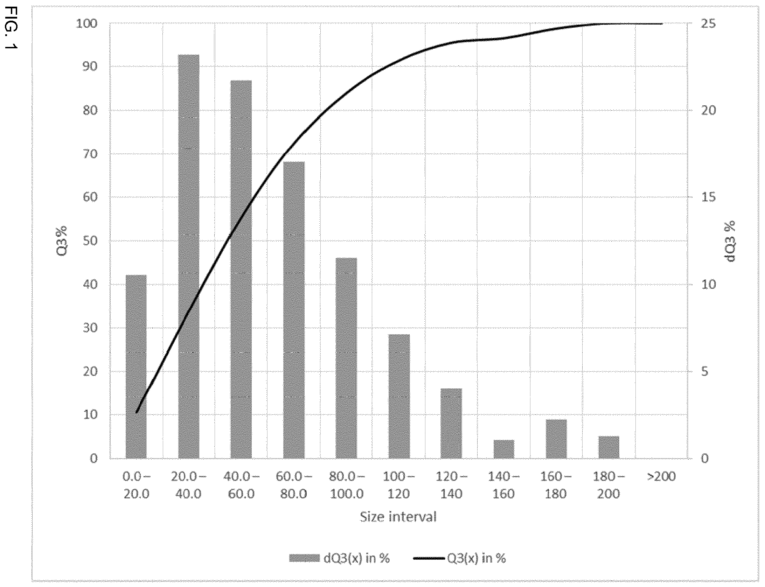

The cement kiln dust may be used as supplied, with all sizes of particles. This is favourable in terms of reducing waste and reducing production time by not needing any sieving or other size filtering step. An un-sieved sample of cement kiln dust particles already has the majority of particles at the smaller end of the scale (Figure 1).

However, it may be desirable to have a more precise particle size and so the cement kiln dust may optionally be filtered by size prior to dosing with the other starting materials. In this case, the particle size of the cement kiln dust may be filtered to be less than 90 µm. Using a sieved sample of finer cement kiln dust particles may accelerate the reaction time for the hydration (slaking) of the mixture and increase the maximum temperature achieved for hydration.

Particle size can be measured optically by using image analysis software.

### Examples

### Sample analysis of cement kiln dust

The particle size distribution of a sample of cement kiln dust was measured. Image analysis software was used on a sample measured in water to determine the convex hull area equivalent diameter of the particles in the sample. A graph of the particle size distribution is shown in Figure 1 and the information is also presented in Table 1.

**Table 1**

| Size interval | No. of particles | cumulative volume % | volume % |
|---|---|---|---|
| 0.0 - 20.0 | 189016 | 10.55 | 10.55 |
| 20.0 - 40.0 | 17889 | 33.70 | 23.16 |
| 40.0 - 60.0 | 3280 | 55.40 | 21.70 |
| 60.0 - 80.0 | 884 | 72.44 | 17.04 |
| 80.0 - 100.0 | 283 | 83.97 | 11.53 |
| 100 - 120 | 98 | 91.41 | 7.44 |
| 120 - 140 | 33 | 95.45 | 4.04 |
| 140 - 160 | 5 | 96.51 | 1.06 |
| 160 - 180 | 7 | 98.73 | 2.22 |
| 180 - 200 | 3 | 100.00 | 1.27 |
| >200 | 0 | 100.00 | 0.00 |

Further samples of cement kiln dust were analysed for chemical composition, moisture quantity, pH and density. These features were analysed for a sample stored in the open air ("shed") and a sample that was dried ("quarry dried"). The results are shown in Table 2.

**Table 2**

| Source | Shed | Quarry Dried |
|---|---|---|
| XRD | % | % |
| Free lime [CaO] | 23.6 | 0.1 |
| Portlandite [Ca(OH)₂] | 0.9 | 30.6 |
| Calcite [CaCO₃] | 0.4 | 40.9 |
| Sylvite [KCl] | 27.7 | 3.0 |
| Halite [NaCl] | 0.3 | 1.0 |
| Alite [C3S] | 1.8 | 2.2 |
| Belite [C2S] | 22.1 | 0.8 |
| Aluminate [C3A] | 0.9 | 0.0 |
| Ferrite [C4AF] | 3.6 | 0.0 |
| Periclase [MgO] | 1.8 | 0.6 |
| Quartz [SiO2] | 2.3 | 7.9 |
| XRF - pressed | % | % |
| K₂O | 13.71 | 14.14 |
| Na₂O | 2.89 | 3.15 |
| Na₂OEq | 11.91 | 12.45 |
| cr | 13.05 | 13.38 |
| SO₃ | 3.37 | 3.35 |
| | | |
| Moisture % | 36 | 6 |
| pH | 12.8 | 12.8 |
| | | |
| Bulk density g/cc Loose | 0.47 | 0.92 |
| Bulk density g/cc Settled | 0.84 | 1.13 |
| Bulk density g/cc Average | 0.66 | 1.03 |

### Example 1

Calcium silicate bricks were made according to a standard process and using a varying recipe according to Table 3 (Sample number 1.1, 1.2 and 1.7 are not according to invention). The process involves mixing the ingredients, carrying out a hydration step, shaping the hydrated mixture into a block, and then hardening the shaped hydrated mixture in an autoclave, thereby arriving at a calcium silicate block. The green strength (i.e. the compressive strength of the shaped block prior to hardening), compressive strength (of the final product, after hardening) and density (of the final product, after hardening) were measured. The measured results are shown in Table 4.

In Example 1, cement kiln dust was tested in various quantities as a weight for weight replacement for natural lime.

The total weight % of all sources of quicklime for sample numbers 1.1 to 1.7 was constant at 4.52 wt% of the total starting materials.

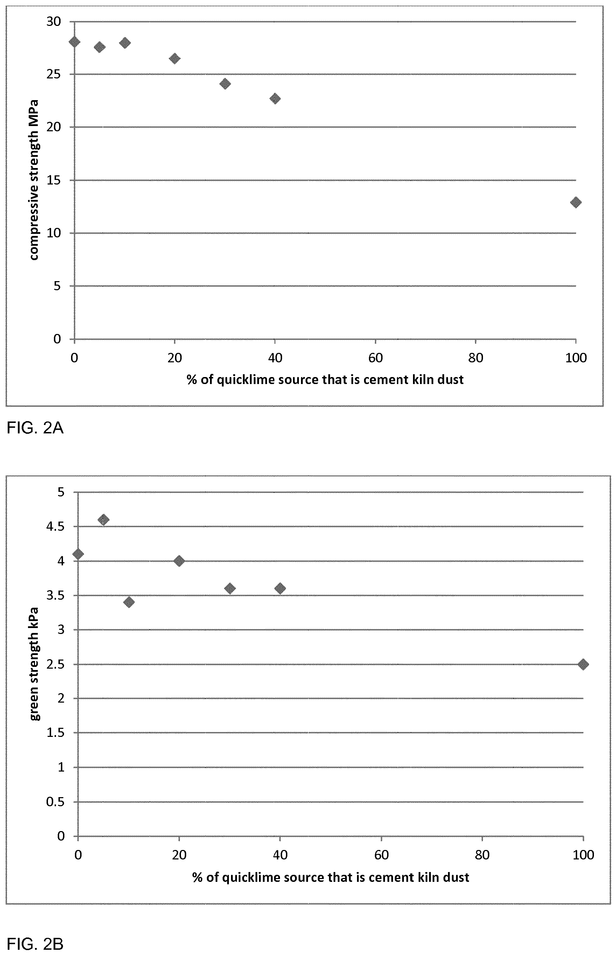

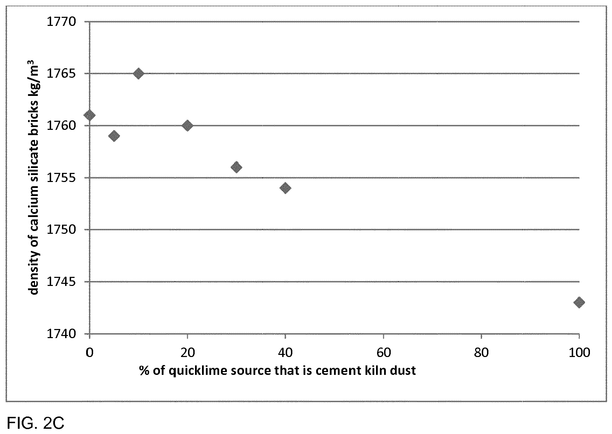

Graphs for amount of quicklime source that is cement kiln dust, and how this impacts final product density, final product compressive strength and pre-hardened green strength are shown in Figures 2A, 2B and 2C. These graphs demonstrate that substituting some quicklime for cement kiln dust does not negatively impact these properties of the finished calcium silicate bricks.

**Table 3**

| Sample number | Sand wt% | Source of CaO | | Water wt% | Total |
|---|---|---|---|---|---|
| | | Natural lime wt% | Cement kiln dust, not sieved wt% | | % |
| 1.1 | 90.5 | 4.5 | 0.0 | 5.0 | 100.0 |
| 1.2 | 90.5 | 4.3 | 0.2 | 5.0 | 100.0 |
| 1.3 | 90.5 | 4.1 | 0.5 | 5.0 | 100.0 |
| 1.4 | 90.5 | 3.6 | 0.9 | 5.0 | 100.0 |
| 1.5 | 90.5 | 3.2 | 1.4 | 5.0 | 100.0 |
| 1.6 | 90.5 | 2.7 | 1.8 | 5.0 | 100.0 |
| 1.7 | 90.5 | 0.0 | 4.5 | 5.0 | 100.0 |

**Table 4**

| Sample number. | Green strength (kPa) | | Compressive strength (MPa) | | Density (kg/m³) | |
|---|---|---|---|---|---|---|
| | Gem. | St.dev. | Gem. | St.dev. | Gem. | St.dev. |
| 1.1 | 4,1 | 0,2 | 28,1 | 0,5 | 1761 | 2 |
| 1.2 | 4,6 | 0,6 | 27,6 | 0,1 | 1759 | 1 |
| 1.3 | 3,4 | 0,1 | 28,0 | 0,3 | 1765 | 4 |
| 1.4 | 4,0 | 0,2 | 26,5 | 0,1 | 1760 | 2 |
| 1.5 | 3,6 | 0,1 | 24,1 | 0,8 | 1756 | 2 |
| 1.6 | 3,6 | 0,2 | 22,7 | 0,8 | 1754 | 2 |
| 1.7 | 2,5 | 0,3 | 12,9 | 0,3 | 1743 | 4 |

### Example 2

Calcium silicate blocks were made according to the general procedure described for Example 1 and using the compositions detailed in Table 5 (Sample number 2.1 and 2.6 are not according to invention). The green strength, compressive strength and density were measured and the measured results for Example 2 are in Table 6.

In Example 2, sample number 2.1 represents a reference composition, in which no cement kiln dust is included. Sample numbers 2.2 to 2.7 demonstrate the effect of adding cement kiln dust to this reference composition. As can be seen, the amounts of sand, water and natural lime are kept constant between sample numbers 2.1 through to 2.7. In sample number 2.8, cement kiln dust partially replaces the natural lime in the ingredients.

Comparing samples 2.1 and 2.7 shows that cement kiln dust is a viable alternative source of quicklime to paper ash. The compressive strength, green strength and density of the products are comparable when using equivalent amounts of paper ash (sample number 2.1) or cement kiln dust (sample number 2.7) with all other components constant. The compressive strength and density of the finished calcium silicate brick were higher when using cement kiln dust compared to paper ash as a partial substitute for natural lime.

**Table 5**

| Sample number | Sand wt% | Source of CaO | | | | Water wt% | Total |
|---|---|---|---|---|---|---|---|
| | | CL90 | S-kalk | CL20 | Cement kiln dust wt% | | % |
| | | Quicklime wt% | Quicklime wt% | Paper ash wt% | | | |
| 2.1 | 90.5 | 1.8 | 1.8 | 0.9 | 0.0 | 5.0 | 100.0 |
| 2.2 | 90.1 | 1.8 | 1.8 | 0.9 | 0.5 | 5.0 | 100.0 |
| 2.3 | 89.7 | 1.8 | 1.8 | 0.9 | 0.9 | 4.9 | 100.0 |
| 2.4 | 89.3 | 1.8 | 1.8 | 0.9 | 1.3 | 4.9 | 100.0 |
| 2.5 | 88.9 | 1.8 | 1.8 | 0.9 | 1.8 | 4.9 | 100.0 |
| 2.6 | 86.6 | 1.7 | 1.7 | 0.9 | 4.3 | 4.8 | 100.0 |
| 2.7 | 90.5 | 1.8 | 1.8 | 0.0 | 0.9 | 5.0 | 100.0 |
| 2.8 | 89.7 | 1.8 | 1.8 | 0.0 | 1.8 | 4.9 | 100.0 |

**Table 6**

| Sample number | Green strength kPa | | Compressive strength MPa | | Density Kg/m³ | |
|---|---|---|---|---|---|---|
| | | St. dev | | St. dev | | St. dev |
| 2.1 | 4,6 | 0,5 | 25,2 | 0,1 | 1759 | 7 |
| 2.2 | 5,5 | 0,7 | 27,9 | 0,5 | 1762 | 10 |
| 2.3 | 5,6 | 0,4 | 29,2 | 1,1 | 1767 | 2 |
| 2.4 | 5,5 | 0,5 | 29,1 | 0,1 | 1767 | 4 |
| 2.5 | 6,2 | 1,5 | 32,5 | 0,2 | 1773 | 2 |
| 2.6 | 8,6 | 0,2 | 39,1 | 0,5 | 1788 | 6 |
| 2.7 | 4,4 | 0,2 | 28,0 | 0,3 | 1764 | 2 |
| 2.8 | 5,3 | 0,4 | 31,2 | 0,4 | 1773 | 4 |

### Example 3

The reaction time with water was measured for cement kiln dust, natural lime and paper ash.

**Table 7**

| Source of quicklime | % CaO | Tₘₐₓ, °C | T(Tₘₐₓ), minutes | ΔT, °C |
|---|---|---|---|---|
| CL90 (natural lime) | 89.3 | 74.5 | 12 | 54.5 |
| S kalk (natural lime) | 88.1 | 72 | 20 | 51.5 |
| CL20 (paper ash) | 22.9 | 34 | 28 | 16 |
| Cement kiln dust, not sieved | 30.5 | 35 | 29 | 15 |
| Cement kiln dust, sieved <90 µm | Not measured | 40 | 22 | 20 |

Cement kiln dust was found in this analysis to have a higher percentage of CaO than paper ash. Furthermore, the sieved sample of cement kiln dust showed better performance than paper ash in terms of the temperature reached and the speed of reaching that temperature. This makes the overall process of the invention for making calcium silicate bricks more efficient when using other alternative sources of quicklime.

## Claims

1. A method of making a calcium silicate brick, the method comprising:
providing starting materials comprising sand, water and one or more sources of quicklime;
mixing the starting materials to form a mixture;
shaping the mixture to form a green body;
hardening the green body to form a calcium silicate block;
wherein the one or more sources of quicklime comprises cement kiln dust,
**characterised in that** the amount of cement kiln dust is from 0.5 to 2.5 wt% of the total weight of starting materials.

2. The method of claim 1 wherein the cement kiln dust has a particle size <90 µm.

3. The method of any preceding claim, wherein the cement kiln dust comprises from 0 to 30 wt% of CaO and from 0 to 40 wt% of Ca(OH)₂ and wherein the total amount of CaO and Ca(OH)₂ in the cement kiln dust is at least 15 wt%.

4. The method of claim 3, wherein the total amount of CaO and Ca(OH)₂ in the cement kiln dust is at least 20 wt% of the cement kiln dust.

5. The method of any preceding claim, wherein the one or more sources of quicklime further comprises paper ash.

6. The method of any preceding claim, wherein the amount of sand is from 85 to 95 wt% of the starting materials.

7. The method of any preceding claim, wherein the amount of water is from 2 to 8 wt% of the starting materials.

8. The method of any preceding claim, wherein the amount of the one or more sources of quicklime is from 1 to 10 wt% of the starting materials.

9. The method of any preceding claim, wherein the one or more sources of quicklime comprises a mixture of natural lime and cement kiln dust.

10. The method of any preceding claim, wherein the one or more sources of quicklime comprises a mixture of natural lime, cement kiln dust and paper ash.

11. The method of any preceding claim, wherein the cement kiln dust makes up from 5 to 60 wt% of the one or more sources of quicklime.

12. Starting materials for making a calcium silicate brick, the starting materials comprising sand, water, quicklime and cement kiln dust, wherein the amount of cement kiln dust is from 0.5 to 2.5 wt% of the total weight of starting materials.

13. Starting materials according to claim 12, having the features of any of claims 2 to 11.

## Patentansprüche

1. Verfahren zur Herstellung eines Kalksandsteins,
wobei das Verfahren Folgendes umfasst: Bereitstellen von Ausgangsmaterialien, die Sand, Wasser und eine oder mehrere Branntkalkquellen umfassen;
Mischen der Ausgangsmaterialien, um ein Gemisch zu bilden;
Formen des Gemischs, um einen Grünkörper zu bilden; Härten des Grünkörpers, um einen Kalksteinblock zu bilden;
wobei die eine oder die mehreren Branntkalkquellen Zementofenstaub umfassen, **dadurch gekennzeichnet, dass** die Menge an Zementofenstaub von 0,5 bis 2,5 Gew.-% des Gesamtgewichts der Ausgangsmaterialien beträgt.

2. Verfahren nach Anspruch 1, wobei der Zementofenstaub eine Teilchengröße < 90 µm aufweist.

3. Verfahren nach irgendeinem der vorhergehenden Ansprüche, wobei der Zementofenstaub 0 bis 30 Gew.-% CaO und 0 bis 40 Gew.-% Ca(OH)₂ umfasst und wobei die Gesamtmenge an CaO und Ca(OH)₂ im Zementofenstaub mindestens 15 Gew.-% beträgt.

4. Verfahren nach Anspruch 3, wobei die Gesamtmenge an CaO und Ca(OH)₂ im Zementofenstaub mindestens 20 Gew.-% des Zementofenstaubs beträgt.

5. Verfahren nach irgendeinem der vorhergehenden Ansprüche, wobei die eine oder die mehreren Branntkalkquellen ferner Papierasche umfassen.

6. Verfahren nach irgendeinem der vorhergehenden Ansprüche, wobei die Menge an Sand 85 bis 95 Gew.-% der Ausgangsmaterialien beträgt.

7. Verfahren nach irgendeinem der vorhergehenden Ansprüche, wobei die Menge an Wasser 2 bis 8 Gew.-% der Ausgangsmaterialien beträgt.

8. Verfahren nach irgendeinem der vorhergehenden Ansprüche, wobei die Menge der einen oder mehreren Branntkalkquellen von 1 bis 10 Gew.-% der Ausgangsmaterialien beträgt.

9. Verfahren nach irgendeinem der vorhergehenden Ansprüche, wobei die eine oder die mehreren Branntkalkquellen ein Gemisch aus natürlichem Kalk und Zementofenstaub umfassen.

10. Verfahren nach irgendeinem der vorhergehenden Ansprüche, wobei die eine oder die mehreren Branntkalkquellen ein Gemisch aus natürlichem Kalk, Zementofenstaub und Papierasche umfassen.

11. Verfahren nach irgendeinem der vorhergehenden Ansprüche, wobei der Zementofenstaub 5 bis 60 Gew.-% der einen oder mehreren Branntkalkquellen ausmacht.

12. Ausgangsmaterialien zur Herstellung eines Kalksandsteins, wobei die Ausgangsmaterialien Sand, Wasser, Branntkalk und Zementofenstaub umfassen, wobei die Menge an Zementofenstaub 0,5 bis 2,5 Gew.-% des Gesamtgewichts der Ausgangsmaterialien ausmacht.

13. Ausgangsstoffe nach Anspruch 12, die die Merkmale von irgendeinem der Ansprüche 2 bis 11 aufweisen.

## Revendications

1. Procédé de fabrication d'une brique de silicate de calcium, le procédé comprenant :
la fourniture de matières premières comprenant du sable, de l'eau et une ou plusieurs sources de chaux vive ;
le mélange des matières premières pour former un mélange ;
le façonnage du mélange pour former un corps vert ;
le durcissement du corps vert pour former un bloc de silicate de calcium ;
dans lequel l'une ou les plusieurs sources de chaux vive comprennent de la poussière de four à ciment, **caractérisé en ce que** la quantité de poussière de four à ciment est de 0,5 à 2,5 % en poids du poids total des matières premières.

2. Procédé selon la revendication 1, dans lequel la poussière de four à ciment a une taille de particules < 90 µm.

3. Procédé selon une quelconque revendication précédente, dans lequel la poussière de four à ciment comprend de 0 à 30 % en poids de CaO et de 0 à 40 % en poids de Ca(OH)₂ et dans lequel la quantité totale de CaO et de Ca(OH)₂ dans la poussière de four à ciment représente au moins 15 % en poids.

4. Procédé selon la revendication 3, dans lequel la quantité totale de CaO et Ca(OH)₂ dans la poussière de four à ciment représente au moins 20 % en poids de la poussière de four à ciment.

5. Procédé selon une quelconque revendication précédente, dans lequel l'une ou les plusieurs sources de chaux vive comprennent en outre de la cendre de papier.

6. Procédé selon une quelconque revendication précédente, dans lequel la quantité de sable représente de 85 à 95 % en poids des matières premières.

7. Procédé selon une quelconque revendication précédente, dans lequel la quantité d'eau est de 2 à 8 % en poids des matières premières.

8. Procédé selon une quelconque revendication précédente, dans lequel la quantité de la ou des sources de chaux vive est de 1 à 10 % en poids des matières premières.

9. Procédé selon une quelconque revendication précédente, dans lequel l'une ou les plusieurs sources de chaux vive comprennent un mélange de chaux naturelle et de poussière de four à ciment.

10. Procédé selon une quelconque revendication précédente, dans lequel l'une ou les plusieurs sources de chaux vive comprennent un mélange de chaux naturelle, de poussière de four à ciment et de cendre de papier.

11. Procédé selon une quelconque revendication précédente, dans lequel la poussière de four à ciment représente de 5 à 60 % en poids de l'une ou des plusieurs sources de chaux vive.

12. Matières premières pour fabriquer une brique de silicate de calcium, les matières premières comprenant du sable, de l'eau, de la chaux vive et de la poussière de four à ciment, dans lesquelles la quantité de poussière de four à ciment est de 0,5 à 2,5 % en poids du poids total des matières premières.

13. Matières premières selon la revendication 12, ayant les caractéristiques selon l'une quelconque des revendications 2 à 11.
